# EUROPÄISCHE PATENTSCHRIFT

(11) **EP 1 894 070 B1**
(45) Veröffentlichungstag und Bekanntmachung des Hinweises auf die Patenterteilung: **28.09.2011**
(21) Anmeldenummer: 06743168.4
(22) Anmeldetag: 16.06.2006
(51) Int. Cl.: G05B 19/418, G05B 23/02, B29D 30/30

(54) **KONZEPT ZUM ÜBERWACHEN DER HERSTELLUNG VON AUS MEHREREN MATERIALLAGEN BESTEHENDEN OBJEKTEN**
CONCEPT FOR MONITORING THE PRODUCTION OF OBJECTS COMPRISING SEVERAL LAYERS OF MATERIAL
CONCEPT DE SURVEILLANCE DE LA PRODUCTION D'OBJETS CONSTITUES DE PLUSIEURS COUCHES DE MATERIAUX

(30) Priorität: 17.06.2005 DE 102005028231
(43) Veröffentlichungstag der Anmeldung: 05.03.2008
(73) Patentinhaber: Goodyear Dunlop Tires Germany GmbH, 63450 Hanau (DE)
(72) Erfinder: SCHMITT, Peter, 91058 Erlangen (DE); KOSTKA, Günther, 91056 Erlangen (DE); WACHTER, Markus, 63450 Hanau (DE)
(74) Vertreter: Kutsch, Bernd
(86) Internationale Anmeldenummer: PCT/EP2006/005804
(87) Internationale Veröffentlichungsnummer: WO 2006/133957

(56) Entgegenhaltungen:
- EP-A- 1 022 119
- EP-A- 1 418 043
- US-A- 3 843 434
- US-A- 4 088 721
- US-A- 5 942 059

## Beschreibung

Die vorliegende Erfindung bezieht sich auf ein Verfahren zur Überwachung der Herstellung von aus mehreren Materiallagen bestehenden Objekten, wie es beispielsweise bei der Produktion von aus mehreren Lagen eines Materials oder von Drähten bestehenden Formteilen angewendet werden kann.

Anwendungen, bei denen im industriellen Maßstab Bauteile aus mehreren Einzellagen durch sukzessives Übereinanderlegen der einzelnen Lagen bzw. durch Wickeln der Lagen um einen Wickelkörper hergestellt werden, sind zahlreich. Beispielsweise werden elektrische Spulen aus Drähten gewickelt und so Lage für Lage sukzessive aufgebaut, Rotorblätter von Windkraftanlagen werden teilweise ebenfalls durch Wickeln einzelner Lagen eines geeigneten Materials auf ein Grundgerüst hergestellt. Bei allen Verfahren ist es das Ziel, am Ende des Herstellungsprozesses ein Objekt zu erhalten, das einen gewünschten dreidimensionalen Aufbau aufweist.

Bei der Herstellung von Rotorblättern für Windkraftanlagen wird beispielsweise so vorgegangen, dass einzelne Lagen eines Materials auf ein Grundgerüst gewickelt werden, wobei diese Lagen beispielsweise aus mit Harz getränkten faserverstärkten Kunststoffmatten bestehen können, die nach der Aushärtung des Harzes einen sehr stabilen Formkörper vorgeben. Dabei werden die Glasfasermatten auf großen Trommeln zur Verfügung gestellt, von denen sie im Laufe der Produktion abgewickelt werden, um als einzelne Lagen auf das Grundgerüst gewickelt zu werden, so dass, anschaulich gesprochen, der Aufbau ähnlich dem Anlegen eines Gipsverbandes erfolgt. Wesentlich für die Sicherheit des fertigen Bauteils ist, dass an jeder Stelle des Bauteils eine erforderliche Mindestmaterialdicke nicht unterschritten wird, so dass die Stabilität des fertigen Rotorblattes sichergestellt ist.

Bei der Produktion von elektrischen Spulen, also der Wicklung des Spulendrahtes, kommt dem korrekten Aufbau der einzelnen Lagen eine besondere Bedeutung dann zu, wenn entlang des Spulendrahtes eine hohe elektrische Spannung abfällt. Dann kann bei einer fehlerhaften Wicklung zwischen zwei benachbarten Drahtstücken eine Spannungsdifferenz auftreten, die so hoch ist, dass die Durchbruchsspannung der Isolation überschritten wird, wodurch die Spule beim Einsatz zerstört wird. Wichtig ist hier also zum Einen, dass je aufgebrachter Wicklungsschicht, von einer Nominaldicke der Wicklungsschicht nicht abgewichen wird, diese also beispielsweise nicht überschritten wird, wenn sich etwa zwei Drähte durch Fehlwicklung kreuzen. Zum Anderen ist auch die exakte geometrische Positionierung des Einzeldrahtes von Interesse, um den oben beschriebenen Fall des Zerstörens der Spule zu verhindern. Insbesondere werden Spulen auch zur Erzeugung hoher, genau definierter Magnetfelder verwendet, um beispielsweise Gasplasma durch das mittels der Spulen erzeugte Magnetfeld innerhalb eines Vakuums einzuschließen. In solchen Fällen haben die einzelnen Wicklungen der Spulen komplizierte geometrische Formen, sie müssen also nach einem exakt berechneten Schema gewickelt werden, so dass in diesem Anwendungsfall nicht nur die Gesamtmaterialstärke einer fertig gewickelten Spule von Interesse ist, sondern auch die geometrische Anordnung der einzelnen Wicklungen bzw. deren Wicklungsreihenfolge.

Ein weiteres Beispiel, bei dem Produkte im großindustriellen Maßstab durch Wickeltechnologien hergestellt werden, ist die Produktion von Reifen. Beim Aufbau von Autoreifen werden einzelne Gummilagen auf einen trommelartigen Träger gewickelt, wodurch sukzessive der fertige Reifenrohling, der auch aus mehreren unterschiedlichen Gummimischungen bestehen kann, entsteht. Dabei können sich während des Wickelprozesses zwischen den einzelnen Gummilagen Luftblasen bilden, durch Prozessfehler, beispielsweise in der Gummizuführung, kann es dazu kommen, dass der fertige Reifen lokal eine zu geringe Materialstärke oder eine zu große Materialstärke aufweist. Ein fertig produzierter Reifen muss eine definierte lokale Materialstärke haben, also einen Querschnitt aufweisen, der einem vorgegebenem Profil folgt. Bei zu geringer Materialstärke kann es zu einem Platzen des Reifens kommen, ist die Materialstärke lokal zu hoch, kann das unerwünschte Laufeigenschaften des Reifens zur Folge haben, wie z.B. Unwucht oder Höhenschlag. Um die mit einem nicht normgemäß hergestellten Reifen einhergehenden Sicherheitsrisiken zu vermeiden, muss also sichergestellt werden, dass der Reifenquerschnitt über den gesamten Reifenumfang dem vorgegebenen Profil folgt.

Eine Überprüfung von industriell gefertigten Bauteilen, die in einer Schicht- oder Wickeltechnologie hergestellt werden, findet gemäß dem Stand der Technik nach der Produktion statt. Dabei wird das fertige Teil hinsichtlich seines inneren Aufbaus geprüft. Dafür werden bekannte zerstörungsfreie Prüfmethoden, wie z.B. die Ultraschalltechnologie oder das Röntgen mittels eines Computertomographen als Prüfverfahren angewendet.

Ein großer Nachteil besteht dabei darin, dass der Prüfaufwand und die damit verbundenen Kosten, insbesondere bei der Anwendung der Computertomographie, sehr hoch sind und dass das Prüfobjekt erst nach der Fertigstellung untersucht wird, also zu einem Zeitpunkt, zu dem die kompletten Fertigungskosten bereits angefallen sind. Den Prüfverfahren nach Fertigstellung sind auch technologische Grenzen gesetzt, z.B. ist es im Falle der Überprüfung einer Spule prinzipiell nicht möglich, nach der Fertigstellung derselben durch ein bildgebendes Verfahren auf die Reihenfolge zu schließen, in der die einzelnen Wicklungen aufgebracht wurden. Auch ist teilweise die Ortsauflösung, mit der ein fertiges Objekt rekonstruiert werden kann, zu gering, um kleine Fehlerstellen innerhalb eines kompakten dreidimensionalen Objektes lokalisieren zu können.

Insbesondere bei Autoreifen besteht dabei das Problem, dass Lufteinschlüsse innerhalb der Gummilagen nur schwer festzustellen sind, da diese in Röntgenaufnahmen nur einen sehr geringen Kontrastunterschied zu dem sie umgebenden Gummimaterial zeige.

US-A- 5,942, 059 beschreibt ein Verfahren gemäß dem Oberbegriff von Anspruch 1 bzw. 2.

Die Aufgabe der vorliegenden Erfindung besteht darin, ein Verfahren zum Überwachen der Herstellung eines aus mehreren Materiallagen bestehenden Objekts zu schaffen, mit dem die Herstellung eines solchen Objekts präziser und effizienter überwacht werden kann.

Diese Aufgabe wird durch ein Verfahren gemäß Anspruch 1 und durch ein Verfahren gemäß Anspruch 2 gelöst.

Der vorliegenden Erfindung liegt die Erkenntnis zugrunde, dass die Herstellung eines Objekts, welches aus mehreren sukzessive aufeinander aufbauenden Materiallagen besteht, dadurch überwacht werden kann, dass nach dem Aufbringen einer jeden Lage ein Höhenprofil eines Umfanges des Objekts erstellt wird, so dass nach dem Aufbringen einer jeden Materiallage ein Vergleich mit einer Referenzinformation dazu genutzt werden kann, zu beurteilen, ob der vorhergehende Produktionsschritt ein Ergebnis lieferte, das auf ein fehlerfreies Aufbringen der Materiallage schließen lässt. Der wesentliche Vorteil des erfindungsgemäßen Verfahrens besteht dabei darin, dass der räumliche Aufbau des Objekts bzw. des Prüfteils nicht erst nach der Fertigung erfasst und geprüft wird, sondern dass vielmehr während der Fertigung selbst überprüft wird, ob jede einzelne Lage korrekt aufgebracht ist, so dass ausgehend von der ersten Lage ein 3D-Modell des aufzubauenden Körpers angefertigt werden kann, in welchem an jeder Position der Oberfläche des Objekts die mit einer Materiallage hinzukommende Materialstärke dokumentiert ist. Dabeil ergibt sich die ortsabhängige Gesamt-Materialstärke als lokale Summe der jeweils aufgebrachten Lagendicken.

Besonders vorteilhaft an dem erfindungsgemäßen Verfahren ist, dass durch die Beobachtung des Produktentstehungsprozesses Fehler erkannt werden können, die aus technologischen Gründen mit den bisherigen zerstörungsfreien Prüfverfahren an dem fertigen Objekt nicht erkannt werden konnten, da das hier vorgestellte Prüfverfahren im Gegensatz zu den bislang angewendeten Verfahren nicht dazu dient, ein fertiges Produkt auf die Einhaltung von Sollvorgaben (insbesondere der lokalen Dicke oder einer Folge von Lagen bzw. Drähten) zu prüfen, sondern um vielmehr den Aufbau selbst zu überwachen bzw. zu steuern und dadurch die Quote für die Ausbringung von Gutteilen zu verbessern.

Aus der Kenntnis der Dicke einzelner Lagen (welche auch aus verschiedenen Materialien bestehen können, wie z.B. Gummi-, Glasfaser- und Kunststoffmatten oder Metallfolien) und der Erfassung der 3D-Form eines Objekts nach Aufbringung jeder einzelnen Lage kann beispielsweise auf Lufteinschlüsse geschlossen werden oder auch auf die Fehlpositionierung einer einzelnen Lage, wenn beispielsweise die gemessene lokale Gesamtdicke nicht mit der aus der Summe der (ggf. zuvor gemessenen oder bekannten) Dicke der einzelnen Lagen übereinstimmt.

Gemäß einem Ausführungsbeispiel der vorliegenden Erfindung wird die Produktion eines Reifens erfindungsgemäß überwacht, wobei der Reifen durch Wickeln mehrerer Lagen von Gummi auf einen zylindrischen Träger hergestellt wird. Durch das erfindungsgemäße Verfahren kann nun ein Lufteinschluss zwischen einzelnen Lagen detektiert werden, der sich beispielsweise als lokale Dicken-Überhöhung bemerkbar macht. Der besondere Vorteil besteht dabei darin, dass ein Lufteinschluss, der mittels der herkömmlichen Prüfverfahren nach dem vollständigen Erzeugen des Reifens nur schwer nachzuweisen ist, leicht erkannt werden kann, wobei ein zusätzlicher Vorteil darin besteht, dass abhängig von der Schwere eines erkannten Fehlers die Produktion bereits vor deren Beendigung abgebrochen werden kann, um somit Material einzusparen.

In einem weiteren Ausführungsbeispiel der vorliegenden Erfindung wird das erfindungsgemäße Verfahren zur Überprüfung der Herstellung eines Objektes dazu benutzt, das Ende eines auf Wickeln basierenden Produktionsprozesses festzulegen. Dazu wird nach jedem Wickelvorgang der Abstand der Oberfläche des zu produzierenden Objektes zu einem feststehenden Sensor bestimmt, wobei das Objekt durch Wickeln mehrerer Lagen eines Materials um einen zylindrischen Objektträger hergestellt wird. Unterschreitet der Abstand der Oberfläche des Objekts zum Sensor ein bestimmtes Mindestmaß, wird der Produktionsvorgang beendet, das heißt, es werden keine weiteren Lagen des Materials mehr auf das Objekt gewickelt. Dies hat den großen Vorteil, dass, selbst wenn das zu wickelnde Material einer nicht vorhersagbaren Dickenänderung unterliegt, ein Bauteil erzeugt werden kann, dass eine bestimmbare lokale Materialstärke aufweist, wobei die lokale Materialstärke nicht, wie sonst üblich, von der Anzahl der Wickelvorgänge abhängig ist.

Ein weiterer Vorteil des erfindungsgemäßen Verfahrens ist, dass zum Überwachen der Herstellung eines Objekts, dass während der Herstellung rotiert, eine Sensorik verwendet werden kann, die äußerst kostengünstig und technologisch unaufwendig ist. So reicht es z.B. bei dem oben beschriebenen Verfahren, ein eindimensionales Höhenprofil durch beispielsweise ein Lichtschnittverfahren aufzunehmen, da sich das zu erzeugende Objekt kontinuierlich unter dem Sensor hindurchbewegt, so dass durch Kombination des Drehwinkels des zu wickelnden Objekts mit der eindimensionalen Aufnahme eines Höhenprofils ein vollständiges zweidimensionales Abbild des Höhenprofils auf der Oberfläche des zu erstellenden Objekts rekonstruiert werden kann.

Ein weiterer Vorteil der vorliegenden Erfindung ist, dass jede andere Art der Erzeugung eines Höhenprofils der zu überwachenden Objekte möglich ist, insbesondere können auch Verfahren angewendet werde, die direkt ein zweidimensionales Höhenprofil ausmessen können, wie z.B. Streifenprojektionsverfahren oder kapazitive Messverfahren, bei denen die Kapazität einer Oberfläche zu einer gegebenen Referenzoberfläche bestimmt wird, wobei die gemessene Kapazität von dem relativen Abstand der beiden Flächen zueinander abhängt.

In einem weiteren Ausführungsbeispiel der vorliegenden Erfindung wird die Produktion einer elektrischen Spule erfindungsgemäß überwacht, das heißt, nach jedem Aufbringen einer Wicklungslage wird ein Oberflächenhöhenprofil der Spule erzeugt, wobei beim Wickeln einer Spule nicht nur die lokale Materialstärke ein wesentliches Kriterium sein kann, sondern auch die Reihenfolge und die geometrische Orientierung, in der die einzelnen Wicklungen auf dem Wickelkörper aufgebracht werden. Dadurch, dass durch das erfindungsgemäße Verfahren nach jeder einzelnen Wicklungslage eine Überprüfung der Geometrie durchgeführt wird, können auch Fehler in der Reihenfolge der Wicklung erkannt werden, was mit Prüfverfahren, die auf der Untersuchung der fertig gewickelten Spule basieren, prinzipiell nicht möglich ist.

Das erfindungsgemäße Verfahren ist nicht auf Objekte beschränkt, die durch Wickeln von Lagen eines Materials oder durch Wickeln von Drähten entstehen, es kann vielmehr auch auf Körper und Objekte angewendet werden, die durch sukzessives Aufbringen diskreter Lagen (wie z.B. Glasfasermatten) vorbestimmter Form und Dicke auf einen Träger entstehen, wie es z.B. bei der Produktion von Tragflächen von Flugzeugen der Fall ist. Dabei kann jede einzelne Lage unterschiedliche Form und ggf. auch unterschiedliche lokale Dicke aufweisen.

In einem weiteren erfindungsgemäßen Ausführungsbeispiel wird daher der Aufbau eines flächenhaften Körpers, der durch Laminieren mehrerer Lagen von mit Harz getränkten Glasfasermatten gebildet wird, überwacht. Dabei wird nach Aufbringung jeder einzelnen Lage das Höhenprofil der Oberfläche des Körpers ermittelt und es wird die korrekte Aufbringung der Lage durch Vergleich der gemessenen Höheninformationen mit einer aufgrund der lokalen Lagendicke erwarteten Höheninformation verglichen bzw. überprüft. Dabei kommt zur Ermittlung der Höheninformation ein Verfahren zum Einsatz, welches ein zweidimensionales Höhenprofil eines zu untersuchenden Objektes erzeugen kann. Nach jedem Schritt der Produktion wird also eine vollständige 3-dimensionale Oberfläche des zu untersuchenden Objekts dadurch rekonstruiert, das für jeden Punkt der Oberfläche des Objektes der Abstand zu einem gegebenen Referenzpunkt ermittelt wird. Dabei ist zum Einen möglich, ein eindimensionales Lichtschnittverfahren, bei dem eine Höheninformation lediglich entlang einer Messlinie erzeugt wird, zu verwenden, wobei die Messlinie über das gesamte zu untersuchende Objekt bewegt werden muss, um ein vollständiges zweidimensionales Höhenprofil zu erhalten. Zum Anderen kann hier auch das Streifenprojektionsverfahren verwendet werden, welches direkt eine zweidimensionale Höheninformation liefert.

In einem weiteren Ausführungsbeispiel der vorliegenden Erfindung wird das Verfahren dahingehend modifiziert, dass nach der Ermittlung des Höhenprofils einer Grundfläche, also der Fläche, auf der die erste Lage eines Lagenmaterials aufgebracht wird, lediglich das Höhenprofil nach Aufbringen einer letzten Lage erneut ermittelt wird. Kann davon ausgegangen werden, dass sich die Grundfläche mechanisch während des Produktionsprozesses nicht verformt, lässt sich auf diese Weise das Erreichen einer gewünschten Sollmaterialstärke des produzierten Objektes überprüfen. Ist also lediglich die Materialdicke des fertigen Produktes entscheidend, kann auf vorteilhafte Art und Weise eine Überprüfung erfindungsgemäß durchgeführt werden, wobei der Prüfaufwand erheblich reduziert werden kann, da erfindungsgemäß lediglich zwei Höhenprofile aufzuzeichnen und zu bewerten sind. In einer weiteren Ausführungsform der vorliegenden Erfindung, wird bei der Produktion durch das erfindungsgemäße Verfahren bewertet, ob sich die Grundfläche, auf die die erste Materiallage aufgebracht wird, durch während der Produktion auf sie einwirkende Kräfte verformt. Dies ist durch Prüfverfahren nach der Herstellung des fertigen Objektes nur schwer festzustellen, wenn der Grundkörper, der die Grundfläche aufweist, nach der Fertigstellung des Produktes im Objekt verbleibt, wie dies z.B. bei der Herstellung von Rotorblättern der Fall ist. Dabei wird erfindungsgemäß nach Aufbringen jeder einzelnen Lage ein Höhenprofil erstellt, welches mit einem gespeicherten Höhenprofil, das nach dem Aufbringen der vorhergehenden Lage erstellt wurde, verglichen wird. Durch ortsabhängige Subtraktionen der Höhenprofile erhält man die ortsabhängige Dickeninformation der neu aufgebrachten Lage. Wird nach dem Aufbringen einer jeden Lage das erzeugte Dickenprofil zu einem Gesamtdickenprofil aufsummiert, so erhält man nach Ende der Produktion das Gesamtdickenprofil des produzierten Objekts, so dass durch Kombination des zuletzt gemessenen Oberflächenprofils mit dem Gesamtdickenprofil auf die Form des Trägerkörpers geschlossen werden kann, um somit beispielsweise eine unerwünschte Deformation desselben festzustellen. Die endgültige Form der Innenwandung des fertigen Objekts ergibt sich also durch Ermittlung der Höheninformation nach Aufbringung der letzten Lage und Berücksichtigung der lokalen Summe der aufgebrachten Materialstärken. Das erfindungsgemäße Verfahren ist selbst dann anwendbar, wenn das gewickelte oder lagenweise aufgebrachte Material kompressibel ist, wobei dann allerdings eine möglicherweise entstehende Kompression in Richtung der Flächennormalen, also der Richtung, welche ortsabhängig jeweils senkrecht auf der Oberfläche steht, durch entsprechende Versuche bekannt sein muss.

In einem weiteren bevorzugten Ausführungsbeispiel der vorliegenden Erfindung wird die Produktion von Autoreifen erfindungsgemäß überwacht und gesteuert. Dabei wird insbesondere das Aufbringen von Gummilagen auf einen Reifenkörper überwacht. Die Gummilagen werden durch Wickeln eines Gummimaterials auf einen zylindrischen Grundkörper in mehreren Lagen auf den Grundkörper aufgebracht, wobei erfindungsgemäß nach jeder einzelnen Lage ein Höhenprofil der aufgebrachten Lage erstellt wird. Dabei lassen sich insbesondere Lufteinschlüsse sicher nachweisen, welche nach Fertigstellung des kompletten Reifens nur noch schwer zu entdecken sind, da die Luft beispielsweise komprimiert sein kann, so dass sich auf der Oberfläche des fertigen Reifens keine lokale Überhöhung des Höhenprofils mehr nachweisen lässt. Trotzdem ist im Inneren des Reifens die Verbindung zwischen zwei aufeinanderfolgenden Lagen durch das eingeschlossene Luftvolumen beeinträchtigt, wobei zu beachten ist, dass im Betrieb eines Reifens hohe Temperaturen auftreten können, so dass die eingeschlossene Luft sich thermisch ausdehnt und somit eventuell die mechanische Verbindung zwischen den zwei betroffenen Gummilagen verschlechtert und im Extremfall sogar die beiden Lagen über die Gesamtbreite des Reifens voneinander löst. Erfindungsgemäß kann nun ein solcher Lufteinschluss dadurch sicher erkannt werden, dass die auf eine eingeschlossene Luftblase einwirkende Kraft durch lediglich eine weitere Gummilage gering ist, so dass die eingeschlossene Luftblase nur wenig komprimiert wird und durch das erfindungsgemäße Verfahren leicht als lokale Überhöhung innerhalb eines Höhenprofils der Reifenoberfläche nachzuweisen ist.

Bevorzugte Ausführungsbeispiele der vorliegenden Erfindung werden nachfolgend bezugnehmend auf die beiliegenden Zeichnungen detailliert erläutert. Es zeigen:
- Fig. 1: Verfahren zum Überwachen der Herstellung.
- Fig. 2: Überwachen eines aus gewickeltem Lagenmaterial bestehenden Formteiles.
- Fig. 3: System zum Überwachen und zum Steuern einer Herstellung.

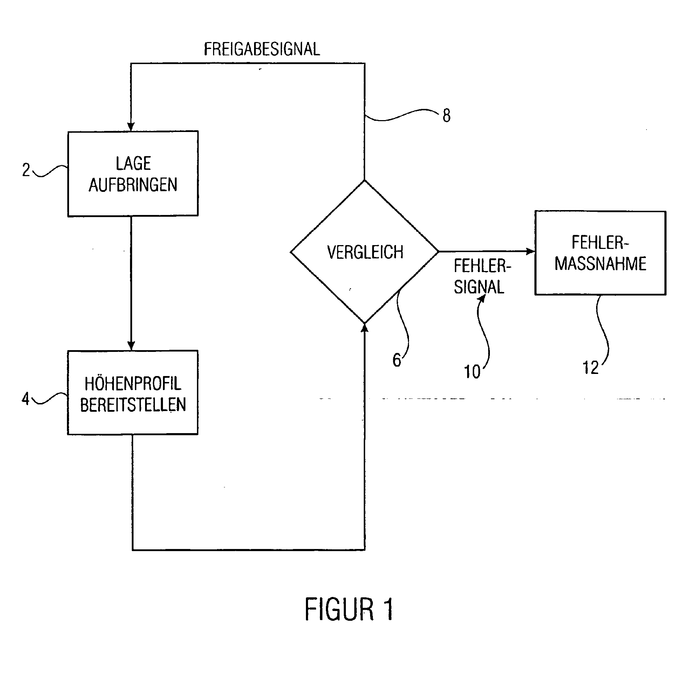

Fig. 1 zeigt ein Flussdiagramm, anhand dessen das erfindungsgemäße Verfahren zum Überwachen der Herstellung eines aus mehreren Materiallagen bestehenden Objekts im Folgenden erläutert wird.

Dabei wird zunächst in einem ersten Herstellungsschritt 2 eine Materiallage des herzustellenden Objekts aufgebracht.

Nach Aufbringen der Materiallage wird in einem Bereitstellungsschritt 4 ein Höhenprofil der Oberfläche des Objekts bereitgestellt, welches im darauffolgenden Schritt weiterverarbeitet wird.

Im Vergleichsschritt 6 wird das bereitgestellte Höhenprofil mit einer Referenzinformation verglichen, wobei die Referenzinformation bevorzugt ein Sollhöhenprofil darstellt. Falls im Vergleichsschritt 6 ein Vergleichsergebnis erzielt wird, das darauf hinweist, dass die Materiallage fehlerfrei aufgebracht wurde, wird ein Freigabesignal 8 ausgegeben, welches ein erneutes Aufbringen einer weiteren Lage veranlasst.

Liefert der Vergleichsschritt 6 ein Ergebnis, das auf eine fehlerhafte Aufbringung der Materiallage hinweist, wird ein Fehlersignal 10 ausgegeben, welches das Ergreifen von Fehlermaßnahmen 12 auslöst.

Wie es anhand von Fig. 1 zu sehen ist, kann somit während der Produktion zu jedem Zeitpunkt die Produktion abgebrochen werden, sobald ein Fehlersignal 10 ausgegeben wird, was zu einer erheblichen Kostenersparnis führen kann, wenn kostenintensive Materialien verarbeitet werden, da der Materialanteil vom Auftreten des Fehlersignals 10 bis zum Fertigstellen des Endprodukts eingespart werden kann. Beim lagenweise Verarbeiten von Kohlefaserverbundwerkstoffen können somit erfindungsgemäß erhebliche Kostenersparnisse realisiert werden.

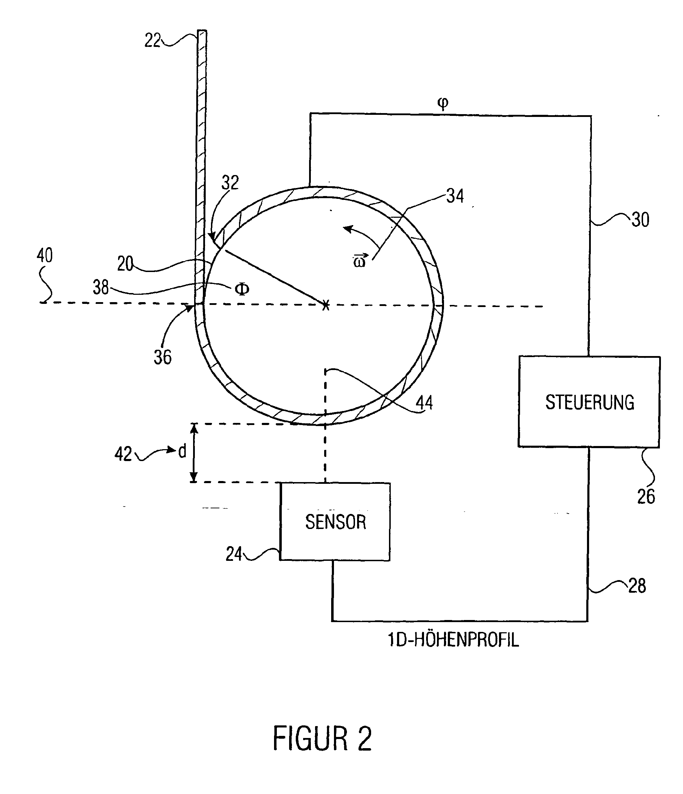

Anhand von Fig. 2 soll im Folgenden ein bevorzugtes Ausführungsbeispiel der vorliegenden Erfindung erläutert werden, bei dem der Aufbau eines Formteils aus einem Lagenmaterial beschrieben wird, welches in großer Länge auf einer Rolle zur Verfügung gestellt wird und wobei das Lagematerial während der Produktion um einen Trägerkörper gewickelt wird.

Die Fig. 2 zeigt einen Trägerkörper 20, ein Lagenmaterial 22, einen Sensor 24 und eine Steuerung 26.

Die Steuerung 26 ist über eine erste Datenverbindung 28 mit dem Sensor 24 verbunden und über eine zweite Datenverbindung 30 mit dem Trägerkörper 20.

Der Trägerkörper 20 kann dabei zum Einen ein Teil des fertigen Produkts werden oder am Ende des Produktionsprozesses entfernt werden, wobei für das erfindungsgemäße Verfahren keine der beiden Möglichkeiten bevorzugt ist, da das Verfahren beide Möglichkeiten zulässt.

Zu Beginn der Produktion wird das Lagenmaterial 22 an einem Aufpunkt 32 fest mit dem Trägerkörper 20 verbunden. Im Folgenden wird davon ausgegangen, dass das zu erzeugende Produkt mit dem Trägerkörper 20 während der Wicklung gedreht wird, und das Lagenmaterial 22 aus einer konstanten Richtung tangential auf den Trägerkörper 20 aufgebracht wird. In der in Fig. 2 gezeigten Aufsicht auf den zylindrischen Trägerkörper 20 und das bandförmige Trägermaterial 22 wird also während der Produktion der Trägerkörper 20 mit einer Winkelgeschwindigkeit 34 (ω) gedreht, so dass das Trägermaterial 22 am Kontaktpunkt 36 tangential auf den Trägerkörper 20 aufgerollt wird. Ein Winkel 38 (φ) zwischen einer Referenzebene 40 und dem Aufpunkt 32 ist dabei ein Maß dafür, wie viele Lagen des Trägermaterials 22 bereits auf den Trägerkörper 20 aufgewickelt wurden. Wird nämlich der Winkel 38 von Beginn des Wickelvorganges an sukzessive aufsummiert, ergibt sich je Aufbringen einer vollständigen Lage des Lagenmaterials 22 eine Erhöhung des Winkels 38 um 2n.

Der Sensor 24 ermittelt dabei während der Drehung in Abhängigkeit des Winkels 38 den Abstand 42 (d) zwischen dem Sensor 24 und dem gewickelten Trägermaterial 22 entlang einer Messlinie 44.

Der Sensor 24 ermittelt dabei ein eindimensionales Höhenprofil der Oberfläche des aufgewickelten Trägermaterials 22 entlang der Messlinie 44, in Abhängigkeit des Winkels 38. Das eindimensionale Höhenprofil wird über die Datenverbindung 28 an die Steuerung 26 übertragen, wobei zeitgleich die Information, zu welchem Winkel 38 das übertragene Höhenprofil zugehörig ist, über die Datenverbindung 30 ebenfalls an die Steuerung 26 übertragen wird. Durch Kombination einer Vielzahl von eindimensionalen Höhenprofilen mit den ihnen zugeordneten Winkeln 38 wird von der Steuerung 26 ein zweidimensionales Höhenprofil errechnet, welches die Oberfläche einer komplett gewickelten Lage des Lagenmaterials 22 beschriebt, so dass nach Fertigstellung jeder einzelnen Lage die vollständige 3D-Information über die Oberfläche des zu produzierenden Objekts zur Verfügung steht.

Nach jeweils einer vollständigen Wicklung des Lagenmaterials 22 um den Trägerkörper 20 wird von der Steuerung 26 das ermittelte 3D-Höhenprofil mit einem Sollhöhenprofil verglichen, um zu beurteilen, ob während der Wicklung der letzten Lage ein Fehler, wie z.B. der Einschluss einer Luftblase, aufgetreten ist. In diesem Fall wird eine Fehlermaßnahme ergriffen, die z.B. darin bestehen kann, dass die Steuerung 26 das Wickeln des Lagenmaterials 22 um den Trägerkörper 20 beendet, um nicht fertig gestellte Objekte als Ausschuss auszusortieren.

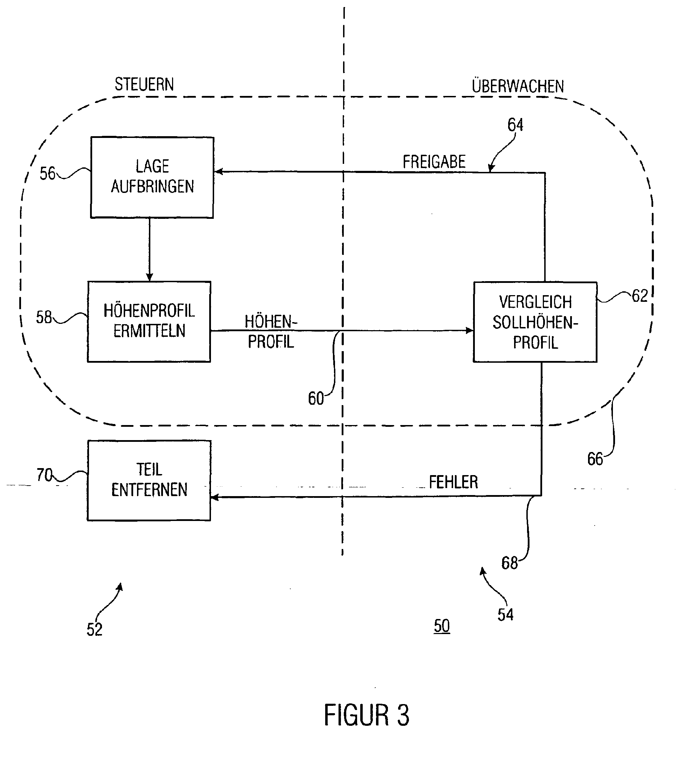

In dem Ausführungsbeispiel von Fig. 3 ist anhand eines Flussdiagramms ein System 50 zum Steuern und zum Überwachen der Herstellung von aus mehreren Materiallagen bestehenden Objekten dargestellt. Das System umfasst dabei einen Steuerteil 52 und einen Überwachungsteil 54.

Im ersten Verfahrensschritt wird in einem Aufbringschritt 56 das Aufbringen einer Materiallage auf den zu produzierenden Körper gesteuert. Daraufhin wird im Messschritt 58 das Höhenprofil der aufgebrachten Lage ermittelt wird.

Das Höhenprofil wird über eine Datenverbindung 60 dem Überwachungsteil 54 des Systems 50 zugänglich gemacht, welcher im Vergleichsschritt 62 das Höhenprofil mit einem Sollhöhenprofil vergleicht.

Wird im Vergleichsschritt 62 ein Ergebnis erzielt, das auf ein fehlerfreies Aufbringen der Materiallage während des Aufbringschrittes 56 hinweist, so wird eine Freigabeinformation über eine Datenschnittstelle 64 an den Steuerteil 52 des Systems 50 übertragen, so dass dieser erneut einen Aufbringschritt durchführen kann. In diesem Fall schließt sich also ein Produktionszykluskreis 66, der das vollständige Aufbringen einer Materiallage und das erfindungsgemäße Überprüfen des Aufbringens der Materiallage umfasst.

Liefert der Vergleichsschritt 62 ein Ergebnis, das auf eine fehlerhafte Aufbringung der Materiallage im Aufbringschritt 56 hinweist, wird über eine Datenschnittstelle 68 ein Fehlersignal an den Steuerteil 52 übermittelt, so dass dieser eine Fehlermaßnahme 70 steuern kann, die beispielsweise das Entfernen des zu erzeugenden Objekts aus der Produktionsanlage umfasst.

In dem erfindungsgemäßen Ausführungsbeispiel, das anhand von Fig. 1 beschrieben ist, wird nach jedem Aufbringen einer Materiallage ein Höhenprofil erstellt, wobei es erfindungsgemäß ebenso vorteilhaft sein kann, ein Höhenprofil erst nach Aufbringen einer Mehrzahl von Materiallagen zu erstellen, um so Bearbeitungszeit des Prüfvorgangs zu sparen.

Obwohl in den beschriebenen Ausführungsbeispielen ein Vergleich des gemessenen Höhenprofils mit einem Sollhöhenprofil erfolgt, kann erfindungsgemäß als Referenzinformation, mit der das Höhenprofil verglichen wird, ebenfalls eine dynamisch nachgeführte, vorhergesagte Sollhöheninformation verwendet werden, die auf den bisher aufgenommenen Höhenprofilen basiert. So wäre es zum Beispiel möglich, bei dem Feststellen des Unterschreitens einer Sollmaterialdicke, ein Materialdickenprofil der nächsten aufzubringenden Lage aus der zu erzielenden Solldicke des Objekts und dem zuletzt aufgenommenen Höhenprofil zu errechnen, um aus einer Mehrzahl von zur Verfügung stehenden Materiallagen diejenige auszuwählen, deren Aufbringen auf das Objekt das Erreichen des Sollwerts sicherstellt, da die ausgewählte Materiallage ein dafür geeignetes Dickenprofil aufweist.

Erfindungsgemäß kann die Produktion eines aus mehreren Lagen hergestellten Objekts auch dahingehend überwacht werden, dass die Schichtdicken der aufeinanderfolgenden Lagen möglichst homogen, also gleich verteilt sind. Dies ist insbesondere dann vorteilhaft, wenn z.B. die Festigkeit eines fertiges Objekts nicht allein aus der Dicke des verbauten Materials abgeleitet werden kann, sondern auch berücksichtigt werden muss, dass einzelne funktionstragende Materialschichten möglichst gleichmäßig innerhalb des Objekts angeordnet sind. Dies kann mit einem Verfahren, welches ein fertiges Objekt erst nach der Fertigstellung zerstörungsfrei prüft, nur schwer nachgewiesen werden.

In den beschriebenen Ausführungsbeispielen wird ein erzeugtes Höhenprofil primär dazu genutzt, es mit einem Sollhöhenprofil zu vergleichen, um den fehlerfreien Fortschritt einer Produktion zu überwachen. Darüber hinaus kann jedes Höhenprofil nach dem Vergleich gespeichert werden, so dass nach Beendigung der Produktion ein vollständiges rekonstruiertes dreidimensionales Abbild des entstandenen Objekts zur Verfügung steht, um dies beispielsweise im Rahmen einer elektronischen Datenverarbeitung weiter zu verwenden. Insbesondere ist dies von großem Vorteil, wenn ein kompliziert aufgebautes Objekt aus eventuell mehreren unterschiedlichen Materiallagen erzeugt werden soll, da anhand des erfindungsgemäßen Verfahrens jede einzelne Lage nach ihrem Aufbringen vermessen wird, so dass ein dreidimensionales Abbild des inneren Aufbaus des fertigen Objekts mit hoher Ortauflösung erzeugt werden kann.

Für die Funktionsweise des erfindungsgemäßen Ausführungsbeispiels, das in Fig. 2 dargestellt ist, wird zu Beginn der Wicklung das Lagenmaterial entlang einer vorbestimmten Linie auf den Trägerkörper aufgebracht. Während der Drehung des Trägerkörpers passiert das Lagenmaterial eine Messlinie, an der die Höheninformation des Trägerkörpers einschließlich des aufgebrachten Materials erfasst wird. Dafür ist zunächst vorausgesetzt, dass der Trägerkörper selbst aus einem lückenlosen Material bzw. einer lückenlosen Trommel besteht, so dass vor Aufbringung der ersten Materiallage die ortsabhängige Höheninformation des Trägerkörpers zur Bestimmung der Auflagefläche herangezogen werden kann.

Alternativ kann der Trägerkörper auch lückenhaft sein, das heißt, in seiner Oberfläche Vertiefungen aufweisen, wobei dann zunächst die Höheninformation nach Aufbringung der ersten Lage des Lagenmaterials gemessen werden muss, um die lokale Position der Grundfläche (des Trägerkörpers) durch Berücksichtigung der als bekannt vorausgesetzten oder zuvor gemessenen lokalen Dicke des Lagenmaterials zu berechnen. Es kann also erfindungsgemäß das Verfahren dazu eingesetzt werden, die Produktion auf einem Trägerkörper mit Oberflächenstörungen zu überwachen, wobei dann während des Wickelns des Objekts kontinuierlich die Höheninformation entlang einer Referenzlinie erfasst wird, wobei diese der Drehlage des Trägerkörpers zugeordnet wird. Dabei kann, wie bei einem Trägerkörper mit durchgängiger Oberfläche auch, ständig überwacht werden, ob die drehlagenabhängige lokale Materialstärke den Sollwerten entspricht.

Bei dem in Fig. 2 beschriebenen Ausführungsbeispiel der vorliegenden Erfindung wird als Messverfahren zur Ermittlung der Höheninformation ein eindimensionales Messverfahren verwendet, wie es z.B. das Lichtschnittverfahren zur Verfügung stellt. Beim Lichtschnittverfahren wird eine Lichtlinie auf den Prüfkörper projiziert, welche unter einem bekannten Winkel zur Projektionsrichtung mit einer Matrixkamera aufgezeichnet wird. Aus der Lage der Lichtlinie im Kamerabild kann nach einer Kalibrierung des Messsystems auf die lokale Höheninformation entlang der Lichtlinie geschlossen werden. Das hier vorgestellte Prüfverfahren kann jedoch mit allen physikalischen Messverfahren, die eine Höheninformation liefern, durchgeführt werden.

Insbesondere ist das erfindungsgemäße Verfahren auch unabhängig davon, in welcher Art und Weise die Aufbringung der Lagen stattfindet und in welcher Art und Weise die Höheninformation nach Aufbringung einer Lage ermittelt wird. Wesentlich ist vielmehr, dass die Erfindung davon ausgeht, dass eine Grundfläche, die der Innenwandung des entstehenden Körpers entspricht, ermittelt wird, und der Aufbau des Körpers durch Ermittelung der Höheninformationen nach Aufbringung jeder einzelnen Lage verfolgt wird. Daher können auch Messverfahren verwendet werden, die direkt ein zweidimensionales Höhenprofil zur Verfügung stellen, bei denen also das Höhenprofil eines dreidimensionalen Objekts nicht erst anhand eines Drehwinkels und eines eindimensionalen Höhenprofils konstruiert werden, wie dies in dem erfindungsgemäßen Ausführungsbeispiel in Fig. 2 der Fall ist.

Als Verfahren zum Ermitteln eines Höhenprofils kommt daher z.B. auch das Streifenprojektionsverfahren in Betracht, sowie andere, nicht optische Verfahren wie z.B. ein kapazitives Messverfahren oder auch ein taktiles Messverfahren, bei dem die zu untersuchende Oberfläche mechanisch abgetastet wird.

Obwohl in dem Ausführungsbeispiel der vorliegenden Erfindung, das in Fig. 2 beschrieben ist, das Aufbringen des Lagenmaterials 22 auf den Trägerkörper hinsichtlich des Erreichens einer Solldicke überwacht wird, kann die Steuerung 26 auch dazu verwendet werden, um die zu erzielende Solldicke aktiv zu beeinflussen. Handelt es sich beispielsweise bei dem Lagenmaterial 22 um ein Gummimaterial, so wird auf das zugeführte Lagenmaterial 22 aufgrund der sich mit der Winkelgeschwindigkeit ω drehenden Trommel (dem Trägerkörper 20) eine Spannung ausgeübt. Eine Spannung eines elastischen Materials wie Gummi, führt dazu, dass sich das Material dehnt, wodurch eine Dickenvariation des zugeführten Lagenmaterials 22 verursacht wird. Wird nun beispielsweise nach Aufbringen einer vollständigen Lage von der Steuerung 26 ermittelt, dass die lagenabhängige Solldicke des Materials überschritten ist, kann beispielsweise durch Variation der Winkelgeschwindigkeit 34, also im beschriebenen Fall durch Erhöhung derselben, die Spannung auf das Lagenmaterial 22 erhöht werden, wodurch das Material stärker gedehnt wird und somit die nächste aufgebrachte Lage einen geringeren Dickenzuwachs hervorruft.

Eine wie oben beschriebene Steuerung einer aufgebrachten Dicke eines Lagenmaterials aus einer Gummimischung ist insbesondere bei der Produktion von Reifen vorteilhaft, da es hierbei auf eine präzise Einhaltung der Gesamtmaterialstärke ankommt, wobei durch das oben beschriebene erfindungsgemäße Verfahren zum Einhalten der Materialstärke dadurch beigetragen wird, dass eine Dickenänderung des zugeführten Lagenmaterials 22 während der Produktion ausgeglichen werden kann.

Bei dem in Fig. 3 beschriebenen System zum Steuern und Überwachen einer Produktion eines aus mehreren Lagen aufgebauten Objekts wird nahegelegt, dass das Verfahren zum Steuern und das Verfahren zum Überwachen so ausgeführt wird, dass sich die an den Verfahren beteiligten Komponenten in räumlicher Nähe zueinander befinden. Es ist jedoch ohne weiteres möglich, den Steuerteil 52 und den Überwachungsteil 54 des Systems 50, wie sie in Fig. 3 gezeigt sind, räumlich voneinander zu separieren, wobei die Datenverbindungen 60, 64 und 68, die den Steuerteil 52 und den Überwachungsteil 54 verbinden, auf schnurlosen oder auf drahtgebundenen Technologien beruhen können. Insbesondere ist auch eine Verbindung über ein Computernetzwerk, wie z.B. das Internet, möglich, was dann vorteilhaft ist, wenn beispielsweise die Referenzinformationen in Form einer Datenbank nicht am Ort der Produktion zur Verfügung stehen, so dass beispielsweise das Verfahren zum Steuern der Produktion am Produktionsstandort ausgeführt wird, wobei das Verfahren zum Überwachen der Produktion an einem anderen Ort, wie z.B. einem Rechenzentrum, ausgeführt wird.

Abhängig von den Gegebenheiten kann das erfindungsgemäße Verfahren zum Überwachen in Hardware oder in Software implementiert werden. Die Implementation kann auf einem digitalen Speichermedium, insbesondere einer Diskette oder CD mit elektronisch auslesbaren Steuersignalen erfolgen, die so mit einem programmierbaren Computersystem zusammenwirken können, dass das erfindungsgemäße Verfahren zum Überwachen ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt, kann die Erfindung somit als ein Computer-Programm mit einem Programmcode zur Durchführung des Verfahrens realisiert werden, wenn das Computerprogramm auf einem Computer abläuft.

## Patentansprüche

1. Verfahren zum Überwachen einer Herstellung eines Objektes, das eine erste Materiallage und eine auf der ersten Materiallage liegende zweite Materiallage aufweist, mit folgenden Schritten:
Ermitteln (4, 58) eines Höhenprofils der ersten Materiallage nach einem Aufbringen (2, 56) der ersten Materiallage auf einen Lagenträger (20);
Vergleichen (6, 62) des Höhenprofils der ersten Materiallage mit einer Referenzinformation; und, falls im Schritt des Vergleichens (6, 62) ein erstes Ergebnis erzielt wird, das auf ein intaktes Aufbringen (2, 56) der ersten Lage hinweist, Freigeben der Aufbringung der zweiten Materiallage auf die erste Materiallage, oder, falls im Schritt des Vergleichens (6, 62) ein zweites Ergebnis erzielt wird, das auf eine fehlerhafte Aufbringung der ersten Materialllage hinweist, Ergreifen einer Fehlermaßnahme (12, 70);
wobei die Referenzinformation ein vorbestimmtes Sollhöhenprofil umfasst und der Vergleich das erste Ergebnis erzielt, wenn das ermittelte Höhenprofil um weniger als seine vorbestimmte Toleranzschwelle von dem Sollhöhenprofil abweicht, wobei der Vergleich sonst das zweite Ergebnis erzielt;
**dadurch gekennzeichnet, dass** das Verfahren, wenn im Schritt des Vergleichens das erste Ergebnis erzielt wurde, einen Updateschritt aufweist, wobei in dem Updateschritt ein neues Sollhöhenprofil als neue Referenzinformation aus einer Linearkombination des vorbestimmten Sollhöhenprofils und eines Solldickenprofils, welches einen idealen Dickenverlauf der zweiten Materiallage beschreibt, gebildet wird;
dass das Verfahren das Ermitteln eines Höhenprofils der zweiten Materiallage nach einem Aufbringen der zweiten Materiallage auf der ersten Materiallage umfasst;
und dass das Höhenprofil der aufgebrachten zweiten Materiallage mit dem neuen Sollhöhenprofil verglichen wird, und, falls im Schritt dieses Vergleichens ein Ergebnis erzielt wird, das auf eine fehlerhafte Aufbringung der zweiten Materialllage hinweist, Ergreifen einer Fehlermaßnahme.

2. Verfahren zum Überwachen einer Herstellung eines Objektes, das eine erste Materiallage und eine auf der ersten Materiallage liegende zweite Materiallage aufweist, mit folgenden Schritten:
Ermitteln (4, 58) eines Höhenprofils der ersten Materiallage nach einem Aufbringen (2, 56) der ersten Materiallage auf einen Lagenträger (20);
Vergleichen (6, 62) des Höhenprofils der ersten Materiallage mit einer Referenzinformation; und, falls im Schritt des Vergleichens (6, 62) ein erstes Ergebnis erzielt wird, das auf ein intaktes Aufbringen (2, 56) der ersten Lage hinweist, Freigeben der Aufbringung der zweiten Materiallage auf die erste Materiallage, oder, falls im Schritt des Vergleichens (6, 62) ein zweites Ergebnis erzielt wird, das auf eine fehlerhafte Aufbringung der ersten Materialliage hinweist, Ergreifen einer Fehlermaßnahme (12, 70);
wobei die Referenzinformation ein vorbestimmtes Sollhöhenprofil umfasst und der Vergleich das erste Ergebnis erzielt, wenn das ermittelte Höhenprofil um weniger als seine vorbestimmte Toleranzschwelle von dem Sollhöhenprofil abweicht, wobei der Vergleich sonst das zweite Ergebnis erzielt;
**dadurch gekennzeichnet, dass** das Verfahren, wenn im Schritt des Vergleichens das erste Ergebnis erzielt wurde, einen Updateschritt aufweist, wobei in dem Updateschritt ein neues Sollhöhenprofil als neue Referenzinformation aus einer Linearkombination des ermittelten Höhenprofils und eines Solldickenprofils, welches einen idealen Dickenverlauf der zweiten Materiallage beschreibt, gebildet wird;
dass das Verfahren das Ermitteln eines Höhenprofils der zweiten Materiallage nach einem Aufbringen der zweiten Materiallage auf der ersten Materiallage umfasst;
und dass das Höhenprofil der aufgebrachten zweiten Materiallage mit dem neuen Sollhöhenprofil verglichen wird, und, falls im Schritt dieses Vergleichens ein Ergebnis erzielt wird, das auf eine fehlerhafte Aufbringung der zweiten Materialllage hinweist, Ergreifen einer Fehlermaßnahme.

3. Verfahren nach Anspruch 1 oder 2 bei dem das vorbestimmte Sollhöhenprofil in einem Speicher gespeichert ist und nach dem Aufbringen der ersten Materiallage aus dem Speicher gelesen wird.

4. Verfahren nach Anspruch 1 oder 2 bei dem das Objekt ein Reifen ist

5. Verfahren nach Anspruch 1 oder 2 bei dem das Höhenprofil der ersten Materiallage und das Höhenprofil der zweiten Materiallage in Form eines vollständigen zweidimensionalen Abbildes der Oberfläche der ersten bzw. zweiten Materiallage durch Aufnahme eines eindimensionalen Höhenprofils der ersten bzw. zweiten Materiallage entlang einer Messlinie und Bewegen der Messlinie über die gesamte erste bzw. zweite Materiallage ermittelt wird.

6. Verfahren nach Anspruch 5, wobei das eindimensionale Höhenprofil der ersten bzw. der zweiten Materiallage entlang der Messlinie mit Hilfe eines eindimensionalen Lichtschnittverfahrens ermittelt wird.

7. Verfahren nach Anspruch 1 oder 2, bei dem das Höhenprofil der ersten Materiallage und das Höhenprofil der zweiten Materiallage mit Hilfe eines Streifenprojektionsverfahrens direkt in Form eines zweidimensionalen Höhenprofils ermittelt wird.

## Claims

1. Method for monitoring the manufacture of an object, said object having a first material layer and a second material layer lying on top of the first material layer, comprising the following steps:
determining (4, 58) a height profile of the first material layer after applying (2, 56) the first material layer on a layer carrier (20);
comparing (6, 62) the height profile of the first material layer to a reference information; and, in case that in the comparison step (6, 62) a first result is obtained indicating an intact application (2, 56) of the first layer, releasing the application of the second material layer onto the first material layer, or, in case that in the comparison step (6, 62) a second result is obtained indicating a faulty application of the first material layer, taking an error action (12, 70);
wherein the reference information comprises a predetermined desired height profile and the comparison effects the first result when the determined height profile deviates from the desired height profile by less than its predetermined tolerance threshold, wherein the comparison otherwise achieves the second result;
**characterized in that** the method, when the first result had been obtained in the comparison step, includes an update step, wherein in the update step a new desired height profile is formed as the new reference information from a linear combination of the predetermined desired height profile and a desired thickness profile describing an ideal thickness course of the second material layer;
that the method comprises determining a height profile of the second material layer after an application of the second material layer on the first material layer; and
that the height profile of the applied second material layer is compared to the new desired height profile and, in case that in this step of comparison a result is obtained indicating a faulty application of the second material layer, taking an error action.

2. Method for monitoring the manufacture of an object, said object having a first material layer and a second material layer lying on top of the first material layer, comprising the following steps:
determining (4, 58) a height profile of the first material layer after applying (2, 56) the first material layer on a layer carrier (20);
comparing (6, 62) the height profile of the first material layer to a reference information; and, in case that in the comparison step (6, 62) a first result is obtained indicating an intact application (2, 56) of the first layer, releasing the application of the second material layer onto the first material layer, or, in case that in the comparison step (6, 62) a second result is obtained indicating a faulty application of the first material layer, taking an error action (12, 70);
wherein the reference information comprises a predetermined desired height profile and the comparison effects the first result when the determined height profile deviates from the desired height profile by less than its predetermined tolerance threshold, wherein the comparison otherwise achieves the second result;
**characterized in that** the method, when the first result had been obtained in the comparison step, includes an update step, wherein in the update step a new desired height profile is formed as the new reference information from a linear combination of the determined height profile and a desired thickness profile describing an ideal thickness course of the second material layer;
that the method comprises determining a height profile of the second material layer after an application of the second material layer on the first material layer; and
that the height profile of the applied second material layer is compared to the new desired height profile and, in case that in this step of comparison a result is obtained indicating a faulty application of the second material layer, taking an error action.

3. Method according to claim 1 or 2, wherein the predetermined desired height profile is stored in a memory and is read out from the memory after the application of the first material layer.

4. Method according to claim 1 or 2, wherein the object is a tire.

5. Method according to claim 1 or 2, wherein the height profile of the first material layer and the height profile of the second material layer are determined in the form of a complete two-dimensional image of the surface of the first material layer, the second material layer, respectively, by recording a one-dimensional height profile of the first material layer, the second material layer, respectively, along a measuring line and moving the measuring line over the entire first material layer, second material layer, respectively.

6. Method according to claim 5, wherein the one-dimensional height profile of the first material layer, the second material layer, respectively, is determined along the measuring line by means of a one-dimensional light-section method.

7. Method according to claim 1 or 2, wherein the height profile of the first material layer and the height profile of the second material layer are determined directly in the form of a two-dimensional height profile by means of a two-dimensional fringe projection method.

## Revendications

1. Procédé pour la surveillance de la fabrication d'un objet qui présente une première couche de matière et une deuxième couche de matière disposée sur la première couche de matière, comprenant les étapes suivantes consistant à :
déterminer (4, 58) un profil en hauteur de la première couche de matière après l'application (2, 56) de la première couche de matière sur un support de couches (20) ;
comparer (6, 62) le profil en hauteur de la première couche de matière à une information de référence ; et, dans le cas où à l'étape de la comparaison (6, 62) on obtient un premier résultat qui va dans le sens d'une application intacte (2, 56) de la première couche, libérer l'application de la deuxième couche de matière sur la première couche de matière, ou bien, dans le cas où à l'étape de la comparaison (6, 62) on obtient un deuxième résultat qui va dans le sens d'une application défectueuse de la première couche de matière, prendre une mesure qui s'impose en cas d'erreur (12, 70) ;
dans lequel l'information de référence comprend un profil de consigne en hauteur prédéterminé et le premier résultat est obtenu lors de la comparaison lorsque le profil en hauteur déterminé s'écarte du profil de consigne en hauteur d'une valeur inférieure à son seuil de tolérance prédéfini, sinon on obtient le deuxième résultat suite à la comparaison ;
**caractérisé en ce que** le procédé, lorsque le premier résultat est obtenu dans l'étape de la comparaison, présente une étape de mise à jour, un nouveau profil de consigne en hauteur à titre de nouvelle information de référence à partir d'une combinaison linéaire du profil de consigne en hauteur prédéfini et d'un profil de consigne en épaisseur qui décrit une allure idéale en épaisseur de la deuxième couche de matière ;
**en ce que** le procédé comprend la détermination d'un profil en hauteur de la deuxième couche de matière après l'application de la deuxième couche de matière sur la première couche de matière ;
et **en ce que** le profil en hauteur de la deuxième couche de matière appliquée est comparé au nouveau profil de consigne en hauteur, et, dans le cas où à l'étape de cette comparaison, on obtient un résultat qui va dans le sens d'une application défectueuse de la deuxième couche de matière, prendre une mesure qui s'impose en cas d'erreur.

2. Procédé pour la surveillance de la fabrication d'un objet qui présente une première couche de matière et une deuxième couche de matière disposée sur la première couche de matière, comprenant les étapes suivantes consistant à :
déterminer (4, 58) un profil en hauteur de la première couche de matière après l'application (2, 56) de la première couche de matière sur un support de couches (20) ;
comparer (6, 62) le profil en hauteur de la première couche de matière à une information de référence ; et, dans le cas où à l'étape de la comparaison (6, 62) on obtient un premier résultat qui va dans le sens d'une application intacte (2, 56) de la première couche, libérer l'application de la deuxième couche de matière sur la première couche de matière, ou bien, dans le cas où à l'étape de la comparaison (6, 62) on obtient un deuxième résultat qui va dans le sens d'une application défectueuse de la première couche de matière, prendre une mesure qui s'impose en cas d'erreur (12, 70) ;
dans lequel l'information de référence comprend un profil de consigne en hauteur prédéterminé et le premier résultat est obtenu lors de la comparaison lorsque le profil en hauteur déterminé s'écarte du profil de consigne en hauteur d'une valeur inférieure à son seuil de tolérance prédéfini, sinon on obtient le deuxième résultat suite à la comparaison ;
**caractérisé en ce que** le procédé, lorsque le premier résultat est obtenu dans l'étape de la comparaison, présente une étape de mise à jour, un nouveau profil de consigne en hauteur à titre de nouvelle information de référence à partir d'une combinaison linéaire du profil de consigne en hauteur déterminé et d'un profil de consigne en épaisseur qui décrit une allure idéale en épaisseur de la deuxième couche de matière ;
**en ce que** le procédé comprend la détermination d'un profil en hauteur de la deuxième couche de matière après l'application de la deuxième couche de matière sur la première couche de matière ;
et **en ce que** le profil en hauteur de la deuxième couche de matière appliquée est comparé au nouveau profil de consigne en hauteur, et, dans le cas où à l'étape de cette comparaison, on obtient un résultat qui va dans le sens d'une application défectueuse de la deuxième couche de matière, prendre une mesure qui s'impose en cas d'erreur.

3. Procédé selon la revendication 1 ou 2, dans lequel le profil de consigne en hauteur prédéfini est mémorisé dans une mémoire pour être extrait de la mémoire par lecture après l'application de la première couche de matière.

4. Procédé selon la revendication 1 ou 2, dans lequel l'objet est un bandage pneumatique.

5. Procédé selon la revendication 1 ou 2, dans lequel le profil en hauteur de la première couche de matière et le profil en hauteur de la deuxième couche de matière sous la forme d'une reproduction complète en deux dimensions de la surface de la première, respectivement de la deuxième couche de matière, est déterminé par la reproduction d'un profil en hauteur unidimensionnel de la première respectivement de la deuxième couche de matière le long d'une ligne de mesure et par déplacement de la ligne de mesure sur la totalité de la première respectivement de la deuxième couche de matière.

6. Procédé selon la revendication 5, dans lequel le profil en hauteur unidimensionnel de la première respectivement de la deuxième couche de matière le long de la ligne de mesure est déterminé au moyen d'un procédé unidimensionnel à coupe optique.

7. Procédé selon la revendication 1 ou 2, dans lequel le profil en hauteur de la première couche de matière et le profil en hauteur de la deuxième couche de matière sont déterminés au moyen d'un procédé unidimensionnel de projection de franges directement sous la forme d'une profil en hauteur en deux dimensions.
